# EUROPÄISCHE PATENTSCHRIFT

(11) **EP 3 601 843 B1**
(45) Veröffentlichungstag und Bekanntmachung des Hinweises auf die Patenterteilung: **21.02.2024**
(21) Anmeldenummer: 18713834.2
(22) Anmeldetag: 20.03.2018
(51) Int. Cl.: F16F 15/16, F16D 3/80

(54) **DÄMPFUNGSEINRICHTUNG FÜR EINEN ANTRIEBSSTRANG EINES KRAFTFAHRZEUGS, INSBESONDERE EINES KRAFTWAGENS, SOWIE ANTRIEBSSTRANGS MIT EINER SOLCHEN DÄMPFUNGSEINRICHTUNG**
DAMPING DEVICE FOR A POWERTRAIN OF A MOTOR VEHICLE, IN PARTICULAR A CAR, AND POWERTRAIN COMPRISING SUCH A DAMPING DEVICE
DISPOSITIF D'AMORTISSEMENT POUR UNE CHAÎNE CINÉMATIQUE D'UN VÉHICULE AUTOMOBILE, EN PARTICULIER D'UN VÉHICULE À MOTEUR, ET CHAÎNE CINÉMATIQUE COMPRENANT UN TEL DISPOSITIF D'AMORTISSEMENT

(30) Priorität: 30.03.2017 DE 102017205399
(43) Veröffentlichungstag der Anmeldung: 05.02.2020
(73) Patentinhaber: Audi AG, 85045 Ingolstadt (DE)
(72) Erfinder: OBERHAUSER, Thomas, 85053 Ingolstadt (DE)
(74) Vertreter: Bierschneider, Walter
(86) Internationale Anmeldenummer: PCT/EP2018/056947
(87) Internationale Veröffentlichungsnummer: WO 2018/177797

(56) Entgegenhaltungen:
- DE-A1- 4 108 157
- DE-A1-102005 031 813
- DE-A1-102008 030 695
- DE-A1-102011 084 142
- DE-A1-102011 086 008
- FR-A- 1 038 985

## Beschreibung

Die Erfindung betrifft eine Dämpfungseinrichtung für einen Antriebsstrang eines Kraftfahrzeugs, insbesondere eines Kraftwagens, gemäß dem jeweiligen Oberbegriff von Patentanspruch 1 beziehungsweise 11. Außerdem betrifft die Erfindung einen Antriebsstrang für ein Kraftfahrzeug, mit wenigstens einer solchen Dämpfungseinrichtung.

Eine Dämpfungseinrichtung für einen Antriebsstrang eines Kraftfahrzeugs, insbesondere eines Kraftwagens wie beispielsweise eines Personenkraftwagens, ist beispielsweise bereits der DE 10 2007 003 061 A1 als bekannt zu entnehmen. Die Dämpfungseinrichtung weist dabei ein um eine Drehachse drehbares erstes Dämpfungselement und ein zweites Dämpfungselement auf, welches von dem ersten Dämpfungselement antreibbar und dadurch um die Drehachse drehbar ist. In vollständig hergestelltem Zustand des Antriebsstrangs ist beispielsweise das erste Dämpfungselement mit einer ersten Welle drehfest verbunden beziehungsweise von der ersten Welle antreibbar, wobei beispielsweise das zweite Dämpfungselement drehfest mit einer zweiten Welle des Antriebsstrangs verbunden ist beziehungsweise die zweite Welle ist von dem zweiten Dämpfungselement antreibbar. Wird beispielsweise das erste Dämpfungselement von der ersten Welle angetrieben, so kann dann das zweite Dämpfungselement von dem ersten Dämpfungselement angetrieben werden. In der Folge wird beispielsweise die zweite Welle von dem zweiten Dämpfungselement angetrieben, sodass insgesamt die zweite Welle über die Dämpfungseinrichtung und somit über die Dämpfungselemente von der ersten Welle angetrieben wird. Alternativ oder zusätzlich ist es umgekehrt denkbar, dass die erste Welle über die Dämpfungseinrichtung von der zweiten Welle angetrieben werden kann. Somit sind beispielsweise über die Dämpfungseinrichtungen Drehmomente zwischen den Wellen übertragbar.

Die Dämpfungseinrichtung umfasst ferner wenigstens zwei Dämpfungskammern, deren Volumen durch eine Relativdrehung zwischen den Dämpfungselementen veränderbar sind. Mit anderen Worten, kommt es beispielsweise zu einer Relativdrehung zwischen den Dämpfungselementen, so kommt es zu einer Volumenverkleinerung einer ersten der Dämpfungskammern und zu einer Volumenvergrößerung der zweiten Dämpfungskammer. Insbesondere wird beispielsweise das Volumen der ersten Dämpfungskammer um das Maß vergrößert, um welches das Volumen der zweiten Dämpfungskammer verringert wird beziehungsweise umgekehrt.

Die Dämpfungseinrichtung weist ferner wenigstens einen Überströmkanal auf, über welchen die Dämpfungskammern fluidisch miteinander verbunden sind. Außerdem ist ein Dämpfungsfluid vorgesehen, welches bei einer Volumenverkleinerung einer der Dämpfungskammern über den Überströmkanal von der einen Dämpfungskammer in die andere Dämpfungskammer strömt. Durch die Volumenverkleinerung der einen Dämpfungskammer wird beispielsweise zumindest ein Teil des zunächst in der einen Dämpfungskammer aufgenommenen Dämpfungsfluids aus der einen Dämpfungskammer verdrängt, sodass zumindest der verdrängte Teil durch den Überströmkanal strömt und somit über den Überströmkanal aus der einen Dämpfungskammer ausströmt und in die andere Dämpfungskammer einströmt.

Eine solche Dämpfungseinrichtung ist beispielsweise auch aus der US 6 769 520 B2 bekannt. Außerdem offenbart die DE 29 30 244 C2 eine drehelastische Kupplung zur Verbindung zweier im Wesentlichen fluchtend zueinander angeordneter Wellen, bestehend aus einer metallischen, sternförmig mit radial nach außen sich erstreckenden Mitnehmeransätzen versehenen inneren Kupplungshälfte, einer konzentrisch mit Abstand diese umgebenden hülsenförmigen metallischen äußeren Kupplungshälfte und einem zwischen den Kupplungshälften verhafteten Gummi-Federelement, in welchem mit einem Dämpfungsmittel gefüllte, insbesondere hydraulisch über einen oder mehrere jeweils eine Drosselstelle bildende Überströmkanäle miteinander verbundene volumenveränderliche Kammern ausgespart sind.

Darüber hinaus ist aus der DE 31 42 023 C1 eine drehelastische, hydraulisch dämpfende Kupplung bekannt, bestehend aus zwei im Abstand voneinander auf Wellen befestigbaren Flanschen, mit jeweils mindestens drei ineinander eingreifenden Mitnehmern, einem die Mitnehmer kraft- und formschlüssig umschließenden Gummielement mit zwischen den Mitnehmern gebildeten und mit Dämpfungsflüssigkeit gefüllten Kammern sowie aus in den Mitnehmern mindestens eines Flansches eingearbeiteten Drosselöffnungen, über die die zu beiden Seiten dieser Mitnehmer befindlichen Kammern miteinander in Strömungsverbindung gehalten sind.

DE 10 2008 030695 A1 offenbart eine Dämpfungseinrichtung gemäß dem jeweiligen Oberbegriff von Anspruch 1 bzw. 11.

Aufgabe der vorliegenden Erfindung ist es, eine Dämpfungseinrichtung und einen Antriebsstrang der eingangs genannten Art derart weiterzuentwickeln, dass Anlage- beziehungsweise Flankenwechsel auf besonders vorteilhafte und einfache Weise gedämpft werden können.

Diese Aufgabe wird durch eine Dämpfungseinrichtung mit den Merkmalen des Patentanspruchs 1, durch eine Dämpfungseinrichtung mit den Merkmalen des Patentanspruchs 11 sowie durch einen Antriebsstrang mit den Merkmalen des Patentanspruchs 13 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Dämpfungseinrichtung für einen Antriebsstrang eines Kraftfahrzeugs, insbesondere eines Kraftwagens wie beispielsweise eines Personenkraftwagens. Die Dämpfungseinrichtung weist ein um eine Drehachse drehbares erstes Dämpfungselement und ein um die Drehachse drehbares zweites Dämpfungselement auf, welches von dem ersten Dämpfungselement antreibbar und dadurch um die Drehachse drehbar ist. Des Weiteren weist die Dämpfungseinrichtung wenigstens zwei Dämpfungskammern auf, deren Volumen durch eine Relativdrehung zwischen den Dämpfungselementen veränderbar sind. Kommt es beispielsweise zu einer Relativdrehung zwischen den Dämpfungselementen, so wird das Volumen einer ersten der Dämpfungskammern beispielsweise vergrößert, während das Volumen der zweiten Dämpfungskammer verkleinert wird. Insbesondere wird das Volumen der ersten Dämpfungskammer um das gleiche Maß vergrößert, um das das Volumen der zweiten Dämpfungskammer verringert wird beziehungsweise umgekehrt.

Die Dämpfungseinrichtung weist ferner wenigstens einen Überströmkanal auf, über welchen die Dämpfungskammern fluidisch miteinander verbunden beziehungsweise verbindbar sind. Außerdem ist ein beispielsweise als Gas oder Flüssigkeit ausgebildetes Dämpfungsfluid vorgesehen, welches bei einer Volumenverkleinerung einer der Dämpfungskammern über den Überströmkanal von der einen Dämpfungskammer in die andere Dämpfungskammer strömt. Kommt es beispielsweise zu einer solchen Relativdrehung zwischen den Dämpfungselementen, dass es zu einer Volumenverkleinerung der einen Dämpfungskammer und somit zu einer Volumenvergrößerung der anderen Dämpfungskammer kommt, wobei beispielsweise die eine Dämpfungskammer in ihrem Volumen um das Maß verkleinert wird, um das die andere Dämpfungskammer in ihrem Volumen vergrößert wird, so wird beispielsweise zumindest ein Teil des zunächst in der einen Dämpfungskammer aufgenommenen Dämpfungsfluids aus der einen Dämpfungskammer verdrängt. In der Folge strömt beispielsweise zumindest der verdrängte Teil des Dämpfungsfluids durch den Überströmkanal in die andere Dämpfungskammer, sodass zumindest der verdrängte Teil des Dämpfungsfluids über den Überströmkanal aus der einen Dämpfungskammer ausströmt und in die andere Dämpfungskammer einströmt.

Durch die Dämpfungseinrichtung, insbesondere durch die Verdrehbarkeit der Dämpfungselemente relativ zueinander, kann die Dämpfungseinrichtung beispielsweise ein in dem Antriebsstrang vorgesehenes Spiel, welches auch als Antriebsstrangspiel bezeichnet wird, aufnehmen beziehungsweise ausgleichen. In vollständig hergestelltem Zustand des Antriebsstrangs ist beispielsweise das erste Dämpfungselement mit einem ersten Wellenelement drehfest verbunden beziehungsweise von dem ersten Wellenelement antreibbar, indem beispielsweise die Drehmomente von dem ersten Wellenelement auf das erste Dämpfungselement übertragen werden. Ferner ist beispielsweise das zweite Dämpfungselement drehfest mit einem zweiten Wellenelement des Antriebsstrangs verbunden beziehungsweise das zweite Wellenelement ist von dem zweiten Dämpfungselement antreibbar. Wird somit beispielsweise das erste Dämpfungselement von dem ersten Wellenelement angetrieben, so wird dann beispielsweise das zweite Dämpfungselement von dem ersten Dämpfungselement angetrieben, und das zweite Wellenelement wird von dem zweiten Dämpfungselement angetrieben. Insgesamt wird somit das zweite Wellenelement über die Dämpfungseinrichtung und somit über die Dämpfungselemente von dem ersten Wellenelement angetrieben, sodass beispielsweise über die Dämpfungseinrichtung Drehmomente von dem ersten Wellenelement auf das zweite Wellenelement übertragen werden. Alternativ oder zusätzlich ist Umgekehrtes denkbar, sodass beispielsweise das erste Wellenelement über die Dämpfungseinrichtung von dem zweiten Element antreibbar ist. Insgesamt ist erkennbar, dass beispielsweise über die Dämpfungseinrichtung Drehmomente zwischen den Wellenelementen übertragen werden können.

Beispielsweise können die Wellenelemente beziehungsweise die Dämpfungselemente in eine erste Drehrichtung um die Drehachse gedreht werden. Alternativ oder zusätzlich ist es denkbar, dass die Wellenelemente beziehungsweise die Dämpfungselemente in eine der ersten Drehrichtung entgegengesetzte zweite Drehrichtung um die Drehachse gedreht werden können. Infolge von Relativdrehungen zwischen den Dämpfungselementen kann es zu Anlage- beziehungsweise Flankenwechsel kommen. Da es nun auf die beschriebene Weise infolge der Relativdrehungen zwischen den Dämpfungselementen zu einer zumindest teilweisen Verdrängung des Dämpfungsfluids insbesondere aus derjenigen der Dämpfungskammern kommt, die in ihrem Volumen verkleinert wird, können die Anlage- beziehungsweise Flankenwechsel abgedämpft werden, da beispielsweise der Überströmkanal als Drossel für das den Überströmkanal durchströmende und beispielsweise als Hydraulikflüssigkeit ausgebildete Dämpfungsfluid wirkt. Die Dämpfungseinrichtung ist beispielsweise ein zumindest zweiteiliges Bauteil, welches zumindest die Dämpfungselemente als Bauelemente der Dämpfungseinrichtung umfasst. Beispielsweise ist die Dämpfungseinrichtung bezogen auf einen Drehmomentenfluss vor oder hinter einer beispielsweise als Kardanwelle ausgebildeten Gelenkwelle des Antriebsstrangs angeordnet. Durch das Abdämpfen der Anlage- beziehungsweise Flankenwechsel können unerwünschte Geräusche im Antriebsstrang vermieden werden.

Um nun die Anlage- beziehungsweise Flankenwechsel besonders vorteilhaft und auf besonders einfache und somit kostengünstige Weise dämpfen zu können, ist es erfindungsgemäß vorgesehen, dass der beidenends in die jeweiligen Dämpfungskammern mündende Überströmkanal zumindest in einem Längenbereich durch einen durch die Dämpfungselemente direkt begrenzten Spalt zwischen den Dämpfungselementen gebildet ist. Dies bedeutet, dass beispielsweise ein erster Teil beziehungsweise ein erster Teilbereich des Spalts durch das erste Dämpfungselement und ein zweiter Teil beziehungsweise ein zweiter Teilbereich des Spalts durch das zweite Dämpfungselement jeweils direkt begrenzt ist. Unter dem direkten Begrenzen des Spalts durch das jeweilige Dämpfungselement ist zu verstehen, dass beispielsweise zwischen dem Spalt und dem jeweiligen Dämpfungselement kein weiteres Bauelement der Dämpfungseinrichtung angeordnet ist beziehungsweise dass das den Spalt durchströmende Dämpfungsfluid die Dämpfungselemente beziehungsweise jeweilige, den Spalt direkt begrenzende Wandungsbereiche der Dämpfungselemente direkt anströmt und kontaktiert beziehungsweise anströmen und kontaktieren kann.

Der Erfindung liegt dabei insbesondere die Erkenntnis zugrunde, dass der Überströmkanal herkömmlicherweise durch eine speziell gefertigte und beispielsweise als Bohrung ausgebildete Durchgangsöffnung gebildet ist, die üblicherweise in genau einem der Dämpfungselemente ausgebildet ist. Dadurch ist zur Herstellung des Überströmkanals eine zusätzliche, zeit- und kostenintensive Bearbeitung desjenigen der Dämpfungselemente erforderlich, durch welchen der Überströmkanal verläuft. Eine solche zeit- und kostenaufwändige, zusätzliche Bearbeitung kann nun bei der erfindungsgemäßen Dämpfungseinrichtung vermieden werden, da der Überströmkanal, insbesondere zumindest teilweise, zumindest überwiegend oder vollständig, durch die ohnehin vorgesehenen Dämpfungselemente selbst begrenzt wird. Bei Relativdrehungen zwischen den Dämpfungselementen kann beispielsweise das Dämpfungsfluid über den Spalt zwischen den Dämpfungskammern hin- und herströmen, wodurch eine besonders vorteilhafte und insbesondere beidseitige Dämpfung von Anlage- beziehungsweise Flankenwechseln realisierbar ist.

Um die Kosten der Dämpfungseinrichtung besonders gering halten zu können, ist es in weiterer Ausgestaltung der Erfindung vorgesehen, dass der Überströmkanal zumindest überwiegend, insbesondere vollständig, durch den Spalt gebildet ist. Unter der zumindest überwiegenden Bildung des Überströmkanals durch den Spalt ist zu verstehen, dass mehr als die Hälfte der Erstreckung des Überströmkanals durch den Spalt gebildet ist.

Erfindungsgemäß ist zum Einstellen der Dämpfungswirkung der Dämpfungseinrichtung der Spalt in seiner Breite einstellbar. Die Breite des Spalts wird auch als Spaltbreite bezeichnet, wobei durch Einstellen der Spaltbreite die Dämpfungswirkung der Dämpfungseinrichtung eingestellt werden kann. Hierdurch kann eine besonders vorteilhafte und insbesondere bedarfsgerechte Dämpfung realisiert werden. Insbesondere kann die Dämpfung so an unterschiedliche Betriebszustände angepasst werden.

Um die Spaltbreite und somit die Dämpfungswirkung besonders einfach und kostengünstig einstellen zu können, ist bei einer weiteren Ausführungsform der Erfindung wenigstens ein relativ zur wenigstens einem der Dämpfungselemente, insbesondere relativ zu beiden Dämpfungselementen, bewegbares und zumindest einen Teil des Spalts direkt begrenzendes Einstellelement vorgesehen, mittels welchem die Breite des Spalts einstellbar ist.

Um dabei die Kosten besonders gering halten zu können, ist das relativ zu dem wenigstens einen Dämpfungselement bewegbare Einstellelement Bestandteil des anderen Dämpfungselements. Dabei hat es sich als besonders vorteilhaft gezeigt, wenn das Einstellelement bewegbar an einem korrespondierenden Bauelement des anderen Dämpfungselements gehalten ist. Somit ist beispielsweise das andere Dämpfungselement zumindest zweiteilig ausgebildet und umfasst das Einstellelement und das korrespondierende Bauelement, an dem das Einstellelement bewegbar, insbesondere rotatorisch und/oder translatorisch bewegbar, gehalten ist. Wird somit beispielsweise das Einstellelement relativ zu dem korrespondierenden Bauelement des anderen Dämpfungselements bewegt, so wird dadurch die Spaltbreite verändert und somit eingestellt.

Um die Spaltbreite besonders einfach und kostengünstig sowie bedarfsgerecht einstellen zu können, ist es in weiterer Ausgestaltung der Erfindung vorgesehen, dass die Breite des Spalts mittels wenigstens eines Gewindes einstellbar ist.

Dabei hat es sich als besonders vorteilhaft gezeigt, wenn das Einstellelement das genannte Gewinde aufweist, welches beispielsweise als Außengewinde ausgebildet ist. Das Einstellelement ist dabei über das Gewinde und über ein korrespondierendes, an dem Bauelement vorgesehenes weiteres Gewinde, welches beispielsweise als Innengewinde ausgebildet ist, bewegbar an dem Bauelement gehalten. Mittels der ineinandergreifenden Gewinde ist eine rotatorische Bewegung des Einstellelements relativ zu dem Bauelement in eine translatorische Bewegung des Einstellelements relativ zu dem Bauelement umwandelbar, wobei beispielsweise durch die translatorische Bewegung des Einstellelements relativ zu dem Bauelement die Spaltbreite verändert wird und dadurch eingestellt werden kann. Auf diese Weise kann die Spaltbreite besonders präzise und einfach eingestellt werden.

Um die Teileanzahl und somit die Kosten, das Gewicht und den Bauraumbedarf der Dämpfungseinrichtung besonders gering halten zu können, ist es in weiterer Ausgestaltung der Erfindung vorgesehen, dass die Dämpfungselemente die Dämpfungskammern direkt begrenzen. Wie bereits bezüglich des Spalts erläutert, ist unter dem direkten Begrenzen der Dämpfungskammern beispielsweise zu verstehen, dass das beispielsweise in der jeweiligen Dämpfungskammer aufgenommene Dämpfungsfluid die Dämpfungselemente beziehungsweise jeweilige, die jeweiligen Dämpfungskammern direkt begrenzende Wandungsbereiche der Dämpfungselemente, direkt anströmen und berühren kann.

Beispielsweise sind die Dämpfungselemente aus einem metallischen Werkstoff gebildet. Insbesondere ist es denkbar, dass die Dämpfungselemente aus einem Kunststoff und dabei vorzugsweise aus einem faserverstärkten Kunststoff gebildet sind. Eine weitere Ausführungsform zeichnet sich dadurch aus, dass zumindest ein wenigstens eine der Dämpfungskammern, insbesondere direkt, begrenzender Wandungsbereich, insbesondere wenigstens eines der Dämpfungselemente, einen bogenförmigen Verlauf aufweist. Dadurch kann eine besonders vorteilhafte Dämpfungswirkung auf einfache und kostengünstige Weise realisiert werden.

Dabei hat es sich als besonders vorteilhaft gezeigt, wenn sich der bogenförmige Verlauf über die vollständige radiale Erstreckung der wenigstens einen Dämpfungskammer erstreckt, wodurch eine besonders vorteilhafte Dämpfungswirkung auf kostengünstige Weise realisiert werden kann.

Ein zweiter Aspekt der Erfindung betrifft eine Dämpfungseinrichtung für einen Antriebsstrang eines Kraftfahrzeugs, insbesondere eines Kraftwagens wie beispielsweise eines Personenkraftwagens. Die Dämpfungseinrichtung gemäß dem zweiten Aspekt der Erfindung weist ein um eine Drehachse drehbares erstes Dämpfungselement und ein um die Drehachse drehbares zweites Dämpfungselement auf, welches von dem ersten Dämpfungselement antreibbar ist. Dabei sind die vorigen Ausführungen zum ersten Aspekt der Erfindung, insbesondere die Vorteile und vorteilhaften Ausgestaltungen des ersten Aspekts der Erfindung, auch auf den zweiten Aspekt der Erfindung übertragbar und umgekehrt.

Um im Rahmen des zweiten Aspekts der Erfindung eine besonders vorteilhafte Dämpfung auf besonders kostengünstige Weise realisieren zu können, ist es erfindungsgemäß vorgesehen, dass die Dämpfungselemente gemäß dem zweiten Aspekt der Erfindung jeweilige, miteinander verschraubte und somit ineinander eingreifende Gewinde aufweisen, mittels welchen eine Relativdrehung zwischen den Dämpfungselementen in eine rotatorische Relativbewegung zwischen den Dämpfungselementen umwandelbar ist.

Außerdem ist es bei dem zweiten Aspekt der Erfindung erfindungsgemäß vorgesehen, dass an wenigstens einem der Dämpfungselemente zumindest ein aus einem elastisch verformbaren Werkstoff, insbesondere Gummi, gebildetes Dämpfungsteil angeordnet ist, mit welchem das jeweils andere Dämpfungselement infolge der translatorischen Relativbewegung in Stützanlage bewegbar ist.

Mit anderen Worten, wird beispielsweise zunächst das eine Dämpfungselement gedreht, indem beispielsweise das eine Dämpfungselement angetrieben wird, so kommt es beispielsweise zu einer Relativdrehung zwischen den Dämpfungselementen. Mittels der Gewinde wird diese Relativdrehung zwischen den Dämpfungselementen in eine translatorische Relativbewegung zwischen den Dämpfungselementen umgewandelt, sodass beispielsweise das andere Dämpfungselement, insbesondere entlang der Drehachse, translatorisch in Richtung des Dämpfungsteils bewegt wird und schließlich in Stützanlage mit dem Dämpfungsteil kommt. In der Folge wird das Dämpfungsteil mittels des anderen Dämpfungselements elastisch verformt, wodurch beispielsweise Bewegungsenergie der Dämpfungselemente in Verformungsenergie umgewandelt wird. Hierdurch kann eine besonders vorteilhafte Dämpfung von Anlage- beziehungsweise Flankenwechseln auf besonders einfache Weise realisiert werden. Wird dann beispielsweise das andere Dämpfungselement wieder, insbesondere translatorisch und/oder entlang der Drehachse, von dem Dämpfungsteil wegbewegt, so kann das Dämpfungsteil beispielsweise elastisch zurückfedern. Diese Dämpfung erfolgt beispielsweise entlang der Drehachse in eine erste Richtung beziehungsweise dann, wenn es zu einer Relativdrehung zwischen den Dämpfungselementen in eine erste Drehrichtung um die Drehachse kommt.

Um dabei auch eine besonders vorteilhafte Dämpfung in eine der ersten Richtung entgegengesetzte zweite Richtung und somit dann zu realisieren, wenn es zu einer Relativdrehung zwischen den Dämpfungselementen in einer der ersten Drehrichtung entgegengesetzte zweite Drehrichtung kommt, ist es in vorteilhafter Ausgestaltung der Erfindung vorgesehen, dass an wenigstens einem der Dämpfungselemente ein dem Dämpfungsteil gegenüberliegendes, aus einem elastisch verformbaren Werkstoff gebildetes weiteres Dämpfungsteil vorgesehen ist, mit welchem das jeweils andere Dämpfungselement infolge der translatorischen Relativbewegung in Stützanlage bewegbar ist.

Bei dem elastisch verformbaren Werkstoff handelt es sich jeweils beispielsweise um einen Elastomer beziehungsweise um Gummi, wodurch besonders vorteilhafte Dämpfungseigenschaften realisiert werden können.

Ein dritter Aspekt der Erfindung betrifft einen Antriebsstrang für ein Kraftfahrzeug, insbesondere für einen Kraftwagen wie beispielsweise einen Personenkraftwagen. Der erfindungsgemäße Antriebsstrang weist dabei eine erfindungsgemäße Dämpfungseinrichtung gemäß dem ersten Aspekt und/oder dem zweiten Aspekt der Erfindung auf. Vorteile und vorteilhafte Ausgestaltungen des ersten Aspekts der Erfindung und des zweiten Aspekts der Erfindung sind dabei als Vorteile und vorteilhafte Ausgestaltungen des dritten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Querschnittsansicht einer Dämpfungseinrichtung gemäß einer ersten Ausführungsform für einen Antriebsstrang eines Kraftfahrzeugs, mit wenigstens zwei relativ zueinander drehbaren Dämpfungselementen, und mit wenigstens einem Überströmkanal, welcher zumindest in einem Längenbereich durch einen durch die Dämpfungselemente direkt begrenzten Spalt zwischen den Dämpfungselementen gebildet ist;
- Fig. 2: ausschnittsweise eine schematische und geschnittene Seitenansicht der Dämpfungseinrichtung gemäß Fig. 1 in einer Explosionsdarstellung;
- Fig. 3: ausschnittsweise eine schematische Querschnittsansicht der Dämpfungseinrichtung gemäß einer zweiten Ausführungsform;
- Fig. 4: ausschnittsweise eine schematische Querschnittsansicht der Dämpfungseinrichtung gemäß einer dritten Ausführungsform; und
- Fig. 5: eine schematische und geschnittene Seitenansicht der Dämpfungseinrichtung gemäß einer vierten Ausführungsform.

In den Figuren sind gleiche oder funktionsgleiche Elemente mit gleichen Bezugszeichen versehen.

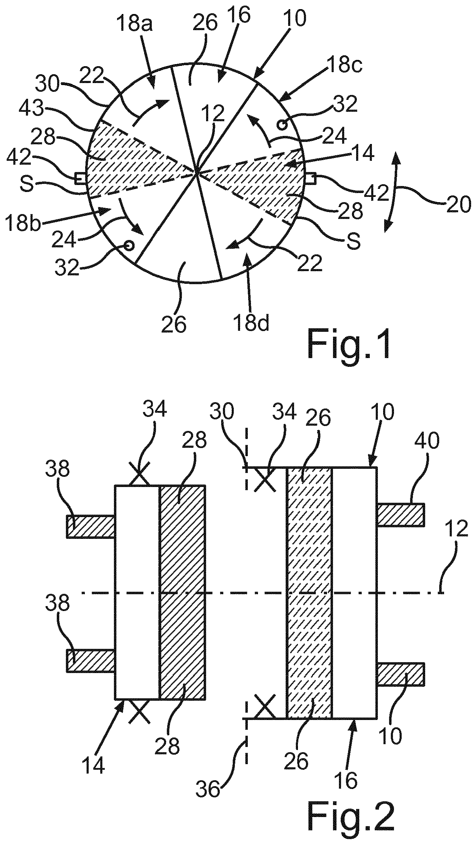

Fig. 1 zeigt ausschnittsweise in einer schematischen Querschnittsansicht eine erste Ausführungsform einer im Ganzen mit 10 bezeichneten Dämpfungseinrichtung für einen Antriebsstrang eines Kraftfahrzeugs, insbesondere eines Kraftwagens wie beispielsweise eines Personenkraftwagens. Die Dämpfungseinrichtung 10 gemäß der ersten Ausführungsform ist in Fig. 2 in einer schematischen und geschnittenen Seitenansicht dargestellt. In vollständig hergestelltem Zustand umfasst das Kraftfahrzeug den genannten Antriebsstrang, mittels welchem das Kraftfahrzeug antreibbar ist. Hierzu umfasst der Antriebsstrang beispielsweise wenigstens einen Antriebsmotor, welcher als Verbrennungskraftmaschine oder Elektromotor ausgebildet sein kann. Der Antriebsmotor weist wenigstens eine beispielsweise als Kurbelwelle ausgebildete Abtriebswelle auf, über welche der Antriebsmotor Drehmomente zum Antreiben des Kraftfahrzeugs bereitstellen kann.

Der Antriebsstrang umfasst ferner eine beispielsweise als Kardanwelle ausgebildete Gelenkwelle, über welche beispielsweise die von dem Antriebsmotor bereitgestellten Drehmomente auf wenigstens eine Achse des Antriebsstrangs übertragen werden können. Somit ist beispielsweise die Kardanwelle von der Abtriebswelle beziehungsweise von den von dem Antriebsmotor über die Abtriebswelle bereitgestellten Drehmomenten antreibbar. Bezogen auf einen Drehmomentenfluss von dem Antriebsmotor zu der Achse ist beispielsweise nach beziehungsweise stromab der Kardanwelle wenigstens ein weiteres Antriebselement vorgesehen, auf welches die Drehmomente von der Kardanwelle übertragen werden können, sodass beispielsweise das Antriebselement von der Kardanwelle antreibbar ist. Die Kardanwelle ist beispielsweise eine Welle des Antriebsstrangs. Die Dämpfungseinrichtung 10 ist beispielsweise vor oder nach der Kardanwelle angeordnet, sodass die Dämpfungseinrichtung 10 beispielsweise bezogen auf den Drehmomentenfluss zwischen der Abtriebswelle und der Kardanwelle oder zwischen der Kardanwelle und dem Antriebselement angeordnet ist. Somit ist beispielsweise die Kardanwelle über die Dämpfungseinrichtung 10 von der Abtriebswelle antreibbar oder das Antriebselement ist über die Dämpfungseinrichtung 10 von der Kardanwelle antreibbar. Somit können über die Dämpfungseinrichtung 10 die genannten Drehmomente zwischen der Kardanwelle und der Abtriebswelle beziehungsweise zwischen der Kardanwelle und dem Antriebselement übertragen werden. Bei dem Antriebselement handelt es sich beispielsweise um eine weitere Welle beziehungsweise um ein weiteres Wellenelement des Antriebsstrangs.

Wie besonders gut aus Fig. 2 erkennbar ist, umfasst die Dämpfungseinrichtung 10 ein um eine Drehachse 12 drehbares erstes Dämpfungselement 14 und ein um die Drehachse 12 drehbares zweites Dämpfungselement 16, welches beispielsweise von dem ersten Dämpfungselement 14 antreibbar und dadurch um die Drehachse 12 drehbar ist. Insbesondere sind die Dämpfungselemente 14 und 16, insbesondere bezogen auf die Drehachse 12, koaxial zueinander angeordnet. Beispielsweise können die zuvor genannten Drehmomente über das Dämpfungselement 14 auf das Dämpfungselement 16 übertragen werden.

In Zusammenschau mit Fig. 1 ist erkennbar, dass die Dämpfungseinrichtung 10 eine Mehrzahl von Dämpfungskammern 18a-d aufweist, wobei beispielsweise die Dämpfungskammern 18a, b ein erstes Kammerpaar und die Dämpfungskammern 18c, d ein zweites Kammerpaar bilden. Dabei ist die jeweilige Dämpfungskammer 18a-d, deren Volumen durch eine Relativdrehung zwischen den Dämpfungselementen 14 und 16 veränderbar ist, in Umfangsrichtung der Dämpfungseinrichtung 10 zwischen den jeweiligen Dämpfungselementen 14 und 16 angeordnet. Dabei ist die Umfangsrichtung in Fig. 1 durch einen Doppelpfeil 20 veranschaulicht, wobei die Umfangsrichtung um die Drehachse 12 verläuft. Wird beispielsweise das Dämpfungselement 14 um die Drehachse 12 relativ zu dem Dämpfungselement 16 in eine in Fig. 1 durch Pfeile 22 veranschaulichte erste Drehrichtung gedreht, so kommt es zu einer Volumenverkleinerung der Dämpfungskammern 18a, d und zu einer Volumenvergrößerung der Dämpfungskammern 18b, c. Dabei werden die jeweiligen Volumen der Dämpfungskammern 18a, d um dasselbe Maß verringert, um das die jeweiligen Volumen der Dämpfungskammern 18b, c vergrößert werden.

Wird beispielsweise das Dämpfungselement 14 um die Drehachse 12 relativ zu dem Dämpfungselement 16 in eine der ersten Drehrichtung entgegengesetzte und in Fig. 1 durch Pfeile 24 veranschaulichte zweite Drehrichtung gedreht, so kommt es zu einer jeweiligen Volumenverkleinerung der Dämpfungskammern 18b, c und zu einer jeweiligen Volumenvergrößerung der Dämpfungskammern 18a, d. Dabei werden die jeweiligen Volumen der Dämpfungskammern 18b, c um dasselbe Maß verringert, um das die jeweiligen Volumen der Dämpfungskammern 18a, d vergrößert werden.

Aus Fig. 1 ist erkennbar, dass die Dämpfungskammern 18a-d, insbesondere in Umfangsrichtung der Dämpfungseinrichtung 10, durch jeweilige Wandungsbereiche 26 und 28 der Dämpfungseinrichtung 10, insbesondere direkt, begrenzt sind. Dabei sind die Wandungsbereiche 26 durch das Dämpfungselement 16 gebildet, während die Wandungsbereiche 28 durch das Dämpfungselement 14 gebildet sind. In radialer Richtung der Dämpfungseinrichtung 10 nach außen hin sind die Dämpfungskammern 18a-d beispielsweise durch eine Wandung 30 begrenzt, die beispielsweise durch das Dämpfungselement 16 gebildet ist, wie insbesondere aus Fig. 2 erkennbar ist. Beispielsweise ist je Wandungsbereich 28 beziehungsweise je Kammerpaar wenigstens ein Überströmkanal vorgesehen, über welchen die Dämpfungskammern 18a, b beziehungsweise 18c, d, insbesondere des jeweiligen Kammerpaars, fluidisch miteinander verbunden sind.

Außerdem weist die Dämpfungseinrichtung 10 ein in Fig. 1 besonders schematisch dargestelltes Dämpfungsfluid 32 auf, welches beispielsweise als Gas oder aber als Flüssigkeit, insbesondere als zähe Flüssigkeit, ausgebildet sein kann. Beispielsweise ist das Dämpfungsfluid als Luft ausgebildet. Ferner ist es denkbar, dass das Dämpfungsfluid als Hydraulikflüssigketi wie beispielsweise als zähes Öl ausgebildet ist.

Beispielsweise bei einer solchen Relativdrehung zwischen den Dämpfungselementen 14 und 16, bei der es zu einer Volumenverkleinerung der Dämpfungskammern 18a, d kommt, kann das beispielsweise zunächst in den Dämpfungskammern 18a, d aufgenommene Dämpfungsfluid über die Überströmkanäle von den jeweiligen Dämpfungskammern 18a, d in die jeweiligen Dämpfungskammern 18b, c überströmen. Da beispielsweise der jeweilige Überströmkanal einen von dem Dämpfungsfluid durchströmbaren Strömungsquerschnitt aufweist, welcher gegenüber der jeweiligen Dämpfungskammer 18a-d wesentlich kleiner ist, wirkt beispielsweise der jeweilige Überströmkanal als Drossel für das Dämpfungsfluid, sodass die Relativdrehung zwischen den Dämpfungselementen 14 und 16 mittels des Dämpfungsfluids gedämpft wird.

Dadurch können Anlage- beziehungsweise Flankenwechsel gedämpft werden. Kommt es demzufolge zu einer solchen Relativdrehung zwischen den Dämpfungselementen 14 und 16, bei welcher es zu einer Volumenverkleinerung der Dämpfungskammern 18b, c kommt, so strömt das zunächst in den Dämpfungskammern 18b, c aufgenommene Dämpfungsfluid über die Überströmkanäle von den Dämpfungskammern 18b, c in die jeweiligen Dämpfungskammern 18a, d. Mit anderen Worten, infolge einer Volumenverkleinerung der jeweiligen Dämpfungskammer 18a, d wird zumindest ein Teil des zunächst in der jeweiligen Dämpfungskammer 18a-d aufgenommenen Dämpfungsfluids aus der jeweiligen Dämpfungskammer 18a, d verdrängt, sodass der verdrängte Teil über den jeweiligen Überströmkanal von der jeweiligen Dämpfungskammer 18a, d in die jeweilige andere Dämpfungskammer 18a-d des jeweiligen Kammerpaares überströmt. Dadurch kann ein übermäßig harter Anlagewechsel vermieden werden, sodass die Entstehung von unerwünschten Geräuschen vermieden werden kann.

Um nun eine besonders vorteilhafte Dämpfung der Anlage- beziehungsweise Flankenwechsel auf besonders einfache und kostengünstige Weise zu realisieren, ist der jeweilige, beidenends in die jeweiligen Dämpfungskammern 18a, b beziehungsweise 18c, d des jeweiligen Kammerpaares mündende Überströmkanal zumindest in einem Längenbereich, insbesondere zumindest überwiegend oder vollständig, durch einen jeweiligen, durch die Dämpfungselemente 14 und 16 direkt begrenzten Spalt S zwischen den Dämpfungselementen 14 und 16 gebildet. Aus Fig. 1 ist erkennbar, dass bei der ersten Ausführungsform der jeweilige Spalt S in radialer Richtung nach au-βen hin direkt durch den Wandungsbereich 30 und somit direkt durch das Dämpfungselement 16 begrenzt ist, wobei der jeweilige Spalt S in radialer Richtung nach innen hin direkt durch den jeweiligen Wandungsbereich 28 und somit durch das Dämpfungselement 14 begrenzt ist. Unter der direkten Begrenzung ist zu verstehen, dass das den jeweiligen Spalt S, insbesondere in Umfangsrichtung der Dämpfungseinrichtung 10, durchströmende Dämpfungsfluid den jeweiligen Wandungsbereich 28 beziehungsweise 30 direkt kontaktiert beziehungsweise berührt. Durch diese Dämpfung von Anlagebeziehungsweise Flankenwechseln können beispielsweise Lastwechsel gedämpft werden, sodass sich bei dem Antriebsstrang eine besonders vorteilhafte Lastwechseldämpfung darstellen lässt.

Um beispielsweise Leckagen sowie unerwünschte Strömungen des Dämpfungsfluids vermeiden zu können, sind beispielsweise Dichtungselemente 34 vorgesehen, welche beispielsweise in radialer Richtung nach außen hin an dem Dämpfungselement 16, insbesondere am Wandungsbereich 30, und in radialer Richtung nach innen hin an dem Dämpfungselement 14 abgestützt sind. Mittels der Dichtungselemente 34 sind die Dämpfungselemente 14 und 16 gegeneinander gedichtet. Beispielsweise ist das jeweilige Dichtungselement 34 als Dichtungsring ausgebildet. Außerdem ist beispielsweise wenigstens ein Sicherungselement vorgesehen, welches bei der ersten Ausführungsform als Sicherungsring 36 ausgebildet ist. Mittels des Sicherungsrings 36 sind die Dämpfungselemente 14 und 16 beispielsweise in axialer Richtung und somit entlang der Drehachse 12 relativ zueinander gesichert, so das beispielsweise mittels des Sicherungsrings 36 axiale Relativbewegungen zwischen den Dämpfungselementen 14 und 16 zumindest begrenzt oder vermieden werden können.

Außerdem weist das Dämpfungselement 14 Befestigungselemente 38 auf, mittels welchen beispielsweise das Dämpfungselement 14 mit der Abtriebswelle oder mit der Kardanwelle koppelbar, insbesondere drehfest verbindbar, ist. Darüber hinaus weist das Dämpfungselement 16 Befestigungselemente 40 auf, mittels welchen das Dämpfungselement 16 beispielsweise mit der Kardanwelle oder mit dem genannten Antriebselement koppelbar, insbesondere drehfest verbindbar, ist.

Die Spalte S weisen beispielsweise unterschiedliche Geometrien, insbesondere unterschiedliche Breiten, auf. Mit anderen Worten unterscheiden sich beispielsweise die Spalte S in ihren jeweiligen, insbesondere in radialer Richtung der Dämpfungseinrichtung 10 verlaufenden Breiten voneinander, wobei die jeweilige Breite des jeweiligen Spalts auch als Spaltbreite bezeichnet wird.

Um die Dämpfungswirkung der Dämpfungseinrichtung 10 bedarfsgerecht einstellen zu können, ist der jeweilige Spalt S in seiner insbesondere in radialer Richtung der Dämpfungseinrichtung 10 verlaufenden Breite einstellbar, wobei die Breite des jeweiligen Spalts S auch als Spaltbreite bezeichnet wird.

Hierzu ist beispielsweise, insbesondere je Spalt S, wenigstens ein relativ zu wenigstens einem der Dämpfungselemente 14 und 16, insbesondere in radialer Richtung des Dämpfungseinrichtung 10, bewegbares und zumindest einen Teil des jeweiligen Spalts S direkt begrenzendes Einstellelement 42 vorgesehen, mittels welchem die jeweilige Breite des jeweiligen Spalts S einstellbar ist. Das jeweilige Einstellelement 42 ist beispielsweise bewegbar an dem Dämpfungselement 16, insbesondere an einem korrespondierenden Bauelement des Dämpfungselements 16, gehalten und insbesondere in radialer Richtung der Dämpfungseinrichtung 10 relativ zu dem Dämpfungselement 14 und relativ zu dem Dämpfungselement 16 beziehungsweise dem Bauelement des Dämpfungselements 16 bewegbar.

Durch insbesondere radiales Bewegen des Einstellelements 42 relativ zu dem Dämpfungselementen 14 und dem korrespondieren Bauelement oder dem Dämpfungselement 16 kann die jeweilige Breite des jeweiligen Spalts S bedarfsgerecht eingestellt werden. Hierzu weist beispielsweise das Einstellelement 42 ein erstes Gewinde in Form eines Außengewindes auf, wobei beispielsweise das Dämpfungselement 16 beziehungsweise das Bauelement ein mit dem ersten Gewinde korrespondierendes zweites Gewinde in Form eines Innengewindes aufweist. Über die Gewinde ist das jeweilige Einstellelement 42 mit dem Dämpfungselement 16 beziehungsweise mit dem korrespondierenden Bauelement des Dämpfungselements 16 verschraubt, sodass die Gewinde ineinander greifen. Wird beispielsweise das Einstellelement 42 um eine beispielsweise schräg oder senkrecht zur Drehachse 12 verlaufende weitere Drehachse relativ zu dem Dämpfungselementen 14 und relativ zu dem korrespondierenden Bauelement des Dämpfungselements 16 gedreht, so wird diese Relativdrehung mittels der Gewinde in eine translatorische Bewegung des Einstellelements 42 relativ zu dem Dämpfungselementen 14 und dem Bauelement, insbesondere entlang der weiteren Drehachse, umgewandelt.

Wird beispielsweise das jeweilige Einstellelement 42 derart gedreht, dass das jeweilige Einstellelement 42 in radialer Richtung nach innen hin bewegt wird, so wird dadurch beispielsweise die jeweilige Breite des jeweiligen Spalts S verringert. Wird demgegenüber jedoch das jeweilige Einstellelement 42 beispielsweise derart relativ zu dem Dämpfungselementen 14 und dem korrespondierenden Bauelement beziehungsweise dem Dämpfungselement 16 gedreht, dass das jeweilige Einstellelement 42 in radialer Richtung nach außen hin relativ zu den Dämpfungselementen 14 und 16 bewegt wird, so wird dadurch beispielsweise die jeweilige Breite des jeweiligen Spalts S vergrößert. Somit ist die jeweilige Breite des jeweiligen Spalts S mittels der genannten Gewinde einstellbar, sodass die jeweilige Breite und somit die Dämpfungswirkung besonders einfach und präzise sowie bedarfsgerecht eingestellt werden können.

Bei der ersten Ausführungsform weisen die Wandungsbereiche 26 und 28 zumindest im Wesentlichen gerade beziehungsweise geradlinige Konturen auf, mittels welchen die Dämpfungskammern 18a-d, insbesondere in Umfangsrichtung der Dämpfungseinrichtung 10, begrenzt sind. Dabei verlaufenden die Konturen der Wandungsbereiche 26 in radialer Richtung der Dämpfungseinrichtung 10 nach innen hin aufeinander zu, wobei auch die Konturen der Wandungsbereiche 28 in radialer Richtung der Dämpfungseinrichtung 10 nach innen hin aufeinander zu verlaufen.

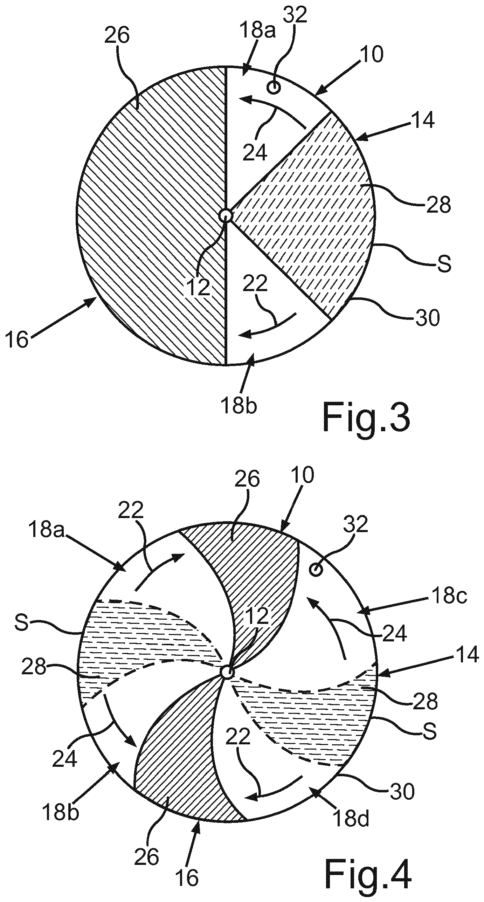

Fig. 3 zeigt eine zweite Ausführungsform der Dämpfungseinrichtung 10. Bei der zweiten Ausführungsform sind genau zwei Dämpfungskammern 18a, b vorgesehen, wobei die die Dämpfungskammern 18a, b direkt begrenzenden Konturen des Wandungsbereichs 26 parallel zueinander verlaufen beziehungsweise zusammenfallen. Demgegenüber verlaufen die die Dämpfungskammern 18a, b direkt begrenzenden Konturen des Wandungsbereiches 28 schräg oder senkrecht zueinander und dabei in radialer Richtung nach innen hin aufeinander zu. Auch bei der zweiten Ausführungsform sind die Konturen geradlinig ausgebildet.

Im Gegensatz dazu ist es bei einer in Fig. 4 gezeigten dritten Ausführungsform vorgesehen, dass die die jeweiligen Dämpfungskammern 18a-d direkt begrenzenden Wandungsbereiche 26 und 28 beziehungsweise deren die Dämpfungskammern 18a-d direkt begrenzenden Konturen einen bogenförmigen Verlauf aufweisen, der sich über die vollständige radiale Erstreckung der jeweiligen Dämpfungskammern 18a-d erstreckt.

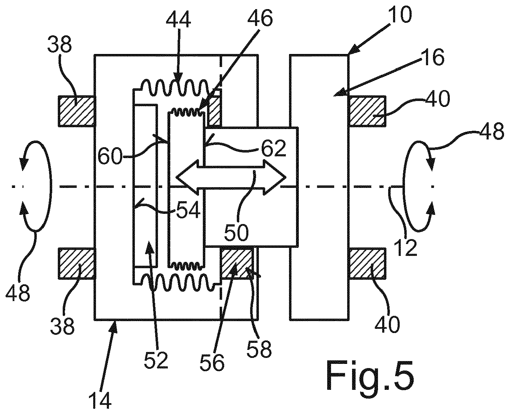

Schließlich zeigt Fig. 5 eine vierte Ausführungsform der Dämpfungseinrichtung 10. Bei der vierten Ausführungsform weist das Dämpfungselement 14 ein erstes Gewinde in Form eines Innengewindes 44 auf, wobei das Dämpfungselement 16 ein zweites Gewinde in Form eines Außengewindes 46 aufweist. Dabei sind die Gewinde (Innengewinde 44 und Außengewinde 46) miteinander verschraubt, sodass die Gewinde ineinandergreifen. Mit anderen Worten sind die Dämpfungselemente 14 und 16 über das Innengewinde 44 und das Außengewinde 46 miteinander verschraubt. Die Drehbarkeit der Dämpfungselemente 14 und 16 relativ zueinander um die Drehachse 12 ist in Fig. 5 durch Doppelpfeile 48 veranschaulicht. Mittels der Gewinde werden Relativdrehungen zwischen den Dämpfungselementen 14 und 16 in eine translatorische Relativbewegung zwischen den Dämpfungselementen 14 und 16 umgewandelt.

Mit anderen Worten, werden die Dämpfungselemente 14 und 16 relativ zueinander um die Drehachse 12 gedreht, so resultieren daraus translatorische Relativbewegungen der Dämpfungselemente 14 und 16 insbesondere entlang der Drehachse 12, wobei diese translatorischen Relativbewegungen zwischen den Dämpfungselementen 14 und 16 in Fig. 5 durch einen Doppelpfeil 50 veranschaulicht sind. Wird beispielsweise das Dämpfungselement 16 um die Drehachse 12 relativ zu dem Dämpfungselement 14 in eine erste Drehrichtung gedreht, so wird beispielsweise das Dämpfungselement 16 entlang der Drehachse 12 translatorisch auf das Dämpfungselement 14 zubewegt. Wird demgegenüber das Dämpfungselement 16 relativ zu dem Dämpfungselement 14 um die Drehachse 12 in eine der ersten Drehrichtung entgegengesetzte zweite Drehrichtung gedreht, so wird dadurch beispielsweise das Dämpfungselement 16 entlang der Drehachse 12 von dem Dämpfungselement 14 wegbewegt. Wird das Dämpfungselement 16 auf das Dämpfungselement 14 zubewegt, so wird das Dämpfungselement 16 in eine erste Richtung entlang der Drehachse 12 relativ zu dem Dämpfungselement 14 bewegt. Wird das Dämpfungselement 16 von dem Dämpfungselement 14 wegbewegt, so wird das Dämpfungselement 16 entlang der Drehachse 12 translatorisch relativ zu dem Dämpfungselement 14 in eine der ersten Richtung entgegengesetzte zweite Richtung bewegt.

Die Dämpfungseinrichtung 10 gemäß der vierten Ausführungsform umfasst ein an dem Dämpfungselement 14 gehaltenes erstes Dämpfungsteil 52, welches aus einem elastisch verformbaren Werkstoff, insbesondere aus Gummi beziehungsweise aus einem Elastomer, gebildet ist. Dabei ist das Dämpfungsteil 52 an einer dem Dämpfungselement 16 zugewandten ersten Stirnwand 54 des Dämpfungselements 14 angeordnet. Ferner ist an dem Dämpfungselement 14 ein dem Dämpfungsteil 52 gegenüberliegendes zweites Dämpfungsteils 56 vorgesehen, welches beispielsweise an einer der Stirnwand 54 gegenüberliegenden Stirnwand 58 des Dämpfungselements 14 angeordnet ist. Dabei liegen die Dämpfungsteile 52 und 56 beziehungsweise die Stirnwände 54 und 58 entlang der Drehachse 12 einander gegenüber, entlang welcher die Dämpfungselemente 14 und 16 relativ zueinander translatorisch bewegbar sind, indem die Dämpfungselemente 14 und 16 relativ zueinander gedreht werden.

Wird das Dämpfungselement 16 auf die beschriebene Weise in die erste Richtung relativ zu dem Dämpfungselement 14 translatorisch bewegt, so kommt das Dämpfungselement 16, insbesondere eine dem Dämpfungsteil 52 gegenüberliegende Stirnwand 60 des Dämpfungselements 16, in Stützanlage mit dem Dämpfungsteil 52. In der Folge wird das Dämpfungsteil 52 elastisch verformt, wodurch beispielsweise Bewegungsenergie in Verformungsenergie umgewandelt wird. Dadurch können Anlage- beziehungsweise Flankenwechsel und somit Lastwechsel besonders gut gedämpft werden. Wird demgegenüber auf die beschriebene Weise das Dämpfungselement 16 in die zweite Richtung relativ zu dem Dämpfungselement 14 translatorisch bewegt, so kommt das Dämpfungselement 16, insbesondere eine dem Dämpfungsteil 56 gegenüberliegende Stirnwand 62 des Dämpfungselements 16, in Stützanlage mit dem Dämpfungsteil 56. In der Folge wird das Dämpfungsteil 56 elastisch verformt, wodurch wiederum Bewegungsenergie in Verformungsenergie umgewandelt wird. Auch dadurch kann eine besonders vorteilhafte Anlagen- beziehungsweise Flankenwechseldämpfung realisiert werden. Durch den Einsatz der einander gegenüberliegenden Dämpfungsteile 52 und 56 kann insbesondere eine beidseitige Anlage- beziehungsweise Flankenwechseldämpfung realisiert werden. Unter einer solchen beidseitigen Dämpfung ist insbesondere zu verstehen, dass Anlage- beziehungsweise Flankenwechsel sowohl in die erste Drehrichtung als auch in die zweite Drehrichtung gedämpft werden können.

## Patentansprüche

1. Dämpfungseinrichtung (10) für einen Antriebsstrang eines Kraftfahrzeugs, mit einem um eine Drehachse (12) drehbaren ersten Dämpfungselement (14), mit einem von dem ersten Dämpfungselement (14) antreibbaren und dadurch um die Drehachse (12) drehbaren zweiten Dämpfungselement (16), mit wenigstens zwei Dämpfungskammern (18a, b), deren Volumen durch eine Relativdrehung zwischen den Dämpfungselementen (14, 16) veränderbar sind, mit wenigstens einem Überströmkanal, über welchen die Dämpfungskammern (18a, b) fluidisch miteinander verbunden sind, und mit einem Dämpfungsfluid (32), welches bei einer Volumenverkleinerung einer der Dämpfungskammern (18a, b) über den Überströmkanal von der einen Dämpfungskammer (18a) in die andere Dämpfungskammer (18b) strömt, wobei der beidenends in die jeweiligen Dämpfungskammern (18a, b) mündende Überströmkanal zumindest in einem Längenbereich durch einen durch die Dämpfungselemente (14, 16) direkt begrenzten Spalt (S) zwischen den Dämpfungselementen (14, 16) gebildet ist,
**dadurch gekennzeichnet, dass**
zum Einstellen der Dämpfungswirkung der Dämpfungseinrichtung (10) der Spalt (S) in seiner Breite einstellbar ist.

2. Dämpfungseinrichtung (10) nach Anspruch 1,
**dadurch gekennzeichnet, dass**
der Überströmkanal zumindest überwiegend, insbesondere vollständig, durch den Spalt (S) gebildet ist.

3. Dämpfungseinrichtung (10) nach Anspruch 1 oder 2,
**dadurch gekennzeichnet, dass**
wenigstens ein relativ zu wenigstens einem der Dämpfungselemente (14, 16) bewegbares und zumindest einen Teil des Spalts (S) direkt begrenzendes Einstellelement (42) vorgesehen ist, mittels welchem die Breite des Spalts (S) einstellbar ist.

4. Dämpfungseinrichtung (10) nach Anspruch 3,
**dadurch gekennzeichnet, dass**
das Einstellelement (42) Bestandteil eines der Dämpfungselemente (14, 16) ist.

5. Dämpfungseinrichtung (10) nach Anspruch 4,
**dadurch gekennzeichnet, dass**
das Einstellelement (42) bewegbar an einem korrespondierenden Bauelement (42) des einen Dämpfungselements (16), dessen Bestandteil das Einstellelement (42) ist, gehalten ist.

6. Dämpfungseinrichtung (10) nach einem der vorhergehenden Ansprüche,
**dadurch gekennzeichnet, dass**
die Breite des Spalts (S) mittels wenigstens eines Gewindes einstellbar ist.

7. Dämpfungseinrichtung (10) nach den Ansprüchen 5 und 6,
**dadurch gekennzeichnet, dass**
das Einstellelement (42) das Gewinde aufweist und über das Gewinde und über ein korrespondierendes, an dem Bauelement (43) vorgesehenes weiteres Gewinde bewegbar an dem Bauelement (43) gehalten ist.

8. Dämpfungseinrichtung (10) nach einem der vorhergehenden Ansprüche,
**dadurch gekennzeichnet, dass**
die Dämpfungselemente (14, 16) die Dämpfungskammern (18a, b) direkt begrenzen.

9. Dämpfungseinrichtung (10) nach einem der vorhergehenden Ansprüche,
**dadurch gekennzeichnet, dass**
zumindest ein wenigstens eine der Dämpfungskammern (18a, b) begrenzender Wandungsbereich (26, 28) einen bogenförmigen Verlauf aufweist.

10. Dämpfungseinrichtung (10) nach Anspruch 9,
**dadurch gekennzeichnet, dass**
sich der bogenförmige Verlauf über die vollständige radiale Erstreckung der wenigstens einen Dämpfungskammer (18a, b) erstreckt.

11. Dämpfungseinrichtung (10) für einen Antriebsstrang eines Kraftfahrzeugs, mit einem um eine Drehachse (12) drehbaren ersten Dämpfungselement (14), und mit einem von dem ersten Dämpfungselement (14) antreibbaren und dadurch um die Drehachse (12) drehbaren zweiten Dämpfungselement (16),
**dadurch gekennzeichnet, dass**:
- die Dämpfungselemente (14, 16) jeweilige, miteinander verschraubte Gewinde (44, 46) aufweisen, mittels welchen eine Relativdrehung zwischen den Dämpfungselementen (14, 16) in eine translatorische Relativbewegung zwischen den Dämpfungselementen (14, 16) umwandelbar ist; und
- an wenigstens einem der Dämpfungselemente (14, 16) zumindest ein aus einem elastisch verformbaren Werkstoff gebildetes Dämpfungsteil (52) angeordnet ist, mit welchem das jeweils andere Dämpfungselement (16) infolge der translatorischen Relativbewegung in Stützanlage bewegbar ist.

12. Dämpfungseinrichtung (10) nach Anspruch 11,
**dadurch gekennzeichnet, dass**
an wenigstens einem der Dämpfungselemente (14, 16) ein dem Dämpfungsteil (52) gegenüberliegendes, aus einem elastisch verformbaren Werkstoff gebildetes weiteres Dämpfungsteil (56) vorgesehen ist, mit welchem das jeweils andere Dämpfungselement (16) infolge der translatorischen Relativbewegung in Stützanlage bewegbar ist.

13. Antriebsstrang für ein Kraftfahrzeug, mit wenigstens einer Dämpfungseinrichtung (10) nach einem der vorhergehenden Ansprüche.

## Claims

1. Damping device (10) for a drivetrain of a motor vehicle, having a first damping element (14) which is rotatable about a rotation axis (12), having a second damping element (16) which is able to be driven by the first damping element (14) and, as a result, is rotatable about the rotation axis (12), having at least two damping chambers (18a, b) of which the volumes are variable by a relative rotation between the damping elements (14, 16), having at least one overflow duct by way of which the damping chambers (18a, b) are fluidically connected to one another, and having a damping fluid (32) which during a volumetric reduction of one of the damping chambers (18a, b) flows by way of the overflow duct from the one damping chamber (18a) into the other damping chamber (18b), wherein the overflow duct, which at both ends opens into the respective damping chambers (18a, b), at least in one longitudinal region is formed by a gap (S) between the damping elements (14, 16), said gap (S) being directly delimited by the damping elements (14, 16),
**characterized in that**
the gap (S) is adjustable in terms of its width for adjusting the damping effect of the damping device (10).

2. Damping device (10) according to Claim 1,
**characterized in that**
the overflow duct is at least predominantly, in particular completely, formed by the gap (S).

3. Damping device (10) according to Claim 1 or 2,
**characterized in that**
at least one adjustment element (42) by means of which the width of the gap (S) is adjustable is provided, said at least one adjustment element (42) being movable relative to at least one of the damping elements (14, 16) and directly delimiting at least part of the gap (S).

4. Damping device (10) according to Claim 3,
**characterized in that**
the adjustment element (42) is a constituent part of one of the damping elements (14, 16).

5. Damping device (10) according to Claim 4,
**characterized in that**
the adjustment element (42) is held so as to be movable on a corresponding construction element (42) of the one damping element (16), the constituent part of which is the adjustment element (42).

6. Damping device (10) according to one of the preceding claims, **characterized in that**
the width of the gap (S) is adjustable by means of at least one thread.

7. Damping device (10) according to Claims 5 and 6,
**characterized in that**
the adjustment element (42) comprises the thread, and by way of the thread and by way of a corresponding further thread provided on the construction element (43) is held so as to be movable on the construction element (43).

8. Damping device (10) according to one of the preceding claims,
**characterized in that**
the damping elements (14, 16) directly delimit the damping chambers (18a, b).

9. Damping device (10) according to one of the preceding claims,
**characterized in that**
at least one wall region (26, 28) delimiting at least one of the damping chambers (18a, b) has an arcuate profile.

10. Damping device (10) according to Claim 9,
**characterized in that**
the arcuate profile extends across the entire radial extent of the at least one damping chamber (18a, b).

11. Damping device (10) for a drivetrain of a motor vehicle, having a first damping element (14) which is rotatable about a rotation axis (12), and having a second damping element (16) which is able to be driven by the first damping element (14) and, as a result, is rotatable about the rotation axis (12),
**characterized in that**:
- the damping elements (14, 16) have respective threads (44, 46) which are screwed to one another and by means of which a relative rotation between the damping elements (14, 16) is convertible into a translatory relative movement between the damping elements (14, 16); and
- disposed on at least one of the damping elements (14, 16) is at least one damping part (52) which is formed from an elastically deformable material and by way of which the respective other damping element (16) is movable to bear in a supporting manner as a result of the translatory relative movement.

12. Damping device (10) according to Claim 11,
**characterized in that**
provided on at least one of the damping elements (14, 16) is a further damping part (56) which lies opposite the damping part (52) and is formed from an elastically deformable material, and by way of which the respective other damping element (16) is movable to bear in a supporting manner as a result of the translatory relative movement.

13. Drivetrain for a motor vehicle, having at least one damping device (10) according to one of the preceding claims.

## Revendications

1. Dispositif d'amortissement (10) pour une chaîne cinématique d'un véhicule automobile, comportant un premier élément d'amortissement (14) rotatif autour d'un axe de rotation (12), comportant un deuxième élément d'amortissement (16) pouvant être entraîné par le premier élément d'amortissement (14) et donc rotatif autour de l'axe de rotation (12), comportant au moins deux chambres d'amortissement (18a, b), dont les volumes peuvent être modifiés par une rotation relative entre les éléments d'amortissement (14, 16), comportant au moins un canal de trop-plein, par le biais duquel les chambres d'amortissement (18a, b) sont reliées les unes aux autres de manière fluidique, et comportant un fluide d'amortissement (32), lequel, lors d'une réduction de volume de l'une des chambres d'amortissement (18a, b), s'écoule par le biais du canal de trop-plein de l'une des chambres d'amortissement (18a) dans l'autre chambre d'amortissement (18b), le canal de trop-plein débouchant aux deux extrémités dans les chambres d'amortissement (18a, b) respectives étant formé par un interstice (S) entre les éléments d'amortissement (14, 16), lequel interstice est limité directement par les éléments d'amortissement (14, 16), au moins dans une région longitudinale,
**caractérisé en ce que**,
pour le réglage de l'effet d'amortissement du dispositif d'amortissement (10), la largeur de l'interstice (S) est réglable.

2. Dispositif d'amortissement (10) selon la revendication 1,
**caractérisé en ce que**
le canal de trop-plein est formé par l'interstice (S) au moins principalement, en particulier complètement.

3. Dispositif d'amortissement (10) selon la revendication 1 ou 2, **caractérisé en ce**
**qu'**au moins un élément de réglage (42) déplaçable par rapport à au moins l'un des éléments d'amortissement (14, 16) et délimitant directement au moins une partie de l'interstice (S) est prévu, élément de réglage au moyen duquel la largeur de l'interstice (S) est réglable.

4. Dispositif d'amortissement (10) selon la revendication 3,
**caractérisé en ce que**
l'élément de réglage (42) fait partie de l'un des éléments d'amortissement (14, 16).

5. Dispositif d'amortissement (10) selon la revendication 4,
**caractérisé en ce que**
l'élément de réglage (42) est retenu de manière déplaçable sur un élément structural (42) correspondant de l'un des éléments d'amortissement (16), dont l'élément de réglage (42) fait partie.

6. Dispositif d'amortissement (10) selon l'une des revendications précédentes,
**caractérisé en ce que**
la largeur de l'interstice (S) est réglable au moyen d'au moins un filetage.

7. Dispositif d'amortissement (10) selon les revendications 5 et 6, **caractérisé en ce que**
l'élément de réglage (42) présente le filetage et est retenu de manière déplaçable sur l'élément structural (43) par le biais du filetage et par le biais d'un autre filetage correspondant prévu sur l'élément structural (43).

8. Dispositif d'amortissement (10) selon l'une des revendications précédentes,
**caractérisé en ce que**
les éléments d'amortissement (14, 16) délimitent directement les chambres d'amortissement (18a, b).

9. Dispositif d'amortissement (10) selon l'une des revendications précédentes,
**caractérisé en ce**
**qu'**au moins une région de paroi (26, 28) délimitant au moins l'une des chambres d'amortissement (18a, b) présente une allure arquée.

10. Dispositif d'amortissement (10) selon la revendication 9,
**caractérisé en ce que**
l'allure arquée s'étend sur toute l'étendue radiale de l'au moins une chambre d'amortissement (18a, b).

11. Dispositif d'amortissement (10) pour une chaîne cinématique d'un véhicule automobile, comportant un premier élément d'amortissement (14) rotatif autour d'un axe de rotation (12), et comportant un deuxième élément d'amortissement (16) pouvant être entraîné par le premier élément d'amortissement (14) et donc rotatif autour de l'axe de rotation (12),
**caractérisé en ce que** :
- les éléments d'amortissement (14, 16) présentent des filetages (44, 46) respectifs vissés l'un sur l'autre, au moyen desquels une rotation relative entre les éléments d'amortissement (14, 16) peut être convertie en un mouvement relatif de translation entre les éléments d'amortissement (14, 16) ; et
- au moins une partie d'amortissement (52) formée à partir d'une matière déformable élastiquement est disposée sur au moins l'un des éléments d'amortissement (14, 16), partie d'amortissement à l'aide de laquelle l'autre élément d'amortissement (16) respectif est déplaçable en appui de support du fait du mouvement relatif de translation.

12. Dispositif d'amortissement (10) selon la revendication 11,
**caractérisé en ce**
**qu'**une autre partie d'amortissement (56) opposée à la partie d'amortissement (52), formée à partir d'une matière déformable élastiquement, est prévue sur au moins l'un des éléments d'amortissement (14, 16), autre partie d'amortissement à l'aide de laquelle l'autre élément d'amortissement (16) respectif est déplaçable en appui de support du fait du mouvement relatif de translation.

13. Chaîne cinématique pour un véhicule automobile, comportant au moins un dispositif d'amortissement (10) selon l'une des revendications précédentes.
